# EUROPÄISCHE PATENTSCHRIFT

(11) **EP 2 718 030 B1**
(45) Veröffentlichungstag und Bekanntmachung des Hinweises auf die Patenterteilung: **12.08.2015**
(21) Anmeldenummer: 12729833.9
(22) Anmeldetag: 24.05.2012
(51) Int. Cl.: H01M 10/42, G01N 3/08, H01M 10/04

(54) **VERFAHREN UND VORRICHTUNG ZUM PRÜFEN VON BATTERIEPLATTEN-PAKETEN**
METHOD AND DEVICE FOR TESTING BATTERY PLATE PACKS
PROCÉDÉ ET DISPOSITIF DE CONTRÔLE D'EMPILEMENTS DE PLAQUES D'ACCUMULATEUR

(30) Priorität: 09.06.2011 AT 8582011
(43) Veröffentlichungstag der Anmeldung: 16.04.2014
(73) Patentinhaber: Rosendahl Nextrom GmbH, 8212 Pischelsdorf (AT)
(72) Erfinder: JANSKY, Franz Albert, A-8272 Sebersdorf (AT); PROKOP, Rainer, A-8274 Buch/Hartberg (AT); ARZT, Christian, A-8225 Pöllau (AT)
(74) Vertreter: Beer & Partner Patentanwälte KG
(86) Internationale Anmeldenummer: PCT/AT2012/000147
(87) Internationale Veröffentlichungsnummer: WO 2012/167289

(56) Entgegenhaltungen:
- EP-A1- 0 029 017
- EP-A1- 0 240 915
- EP-A1- 0 506 645
- US-A- 3 664 655
- US-A- 4 132 313
- US-A1- 2004 172 842

## Beschreibung

Die Erfindung betrifft ein Verfahren und eine Vorrichtung zum Prüfen von Batterieplatten-Paketen mit den Merkmalen der einleitenden Teile der unabhängigen, auf das Verfahren bzw. die Vorrichtung gerichteten Ansprüche.

Beim Herstellen von Batterien und Akkumulatoren werden positive und negative Batterieplatten, die in Taschen aus Separatormaterial aufgenommen ("eingetascht") sind, in die Zellen von Batteriegehäusen eingesetzt.

Dabei ist es nicht nur wichtig, dass in dem Paket die richtige Anzahl von Batterieplatten enthalten ist, sondern auch dass alle im Paket enthaltenen Batterieplatten ordnungsgemäß in Taschen aus Separatormaterial aufgenommen sind.

Dies gilt insbesondere auch für Taschen aus Separatoren, die aus komprimierbarem Material, wie z.B. Glasfaservlies, bestehen (AGM = Absortive Glass Mat-Separatoren).

Das Prüfen von Paketen aus eingetaschten Batterieplatten erfolgt beispielsweise dadurch, dass die Kraft erfasst wird, die erforderlich ist, um das Batterieplatten-Paket auf ein vorbestimmtes Maß (Paketdicke) zusammenzudrücken, wobei dieses Maß beispielsweise der Innenabmessung einer Zelle in einem Batteriegehäuse entspricht, in welche das Batterieplatten-Paket einzusetzen ist. Bei der bekannten Arbeitsweise wird diskontinuierlich gearbeitet, d.h. jedes Batterieplatten-Paket muss extra in die Prüfvorrichtung eingelegt und aus dieser wieder entnommen werden. In der in der Patentanmeldung WO 84/04000 A1 offenbarten Prüfmethode bzw. Vorrichtung werden z. B. Batterieplatten-Pakete mit einer bestimmten Kraft zusammengedrückt und dann die Höhe der Pakete gemessen. Ist die Höhe zu gering, wird die Höhe der Pakete durch eine Beilageplatten erhöht um den Stapel auf eine vorbestimmte Länge zu bringen, die für die späteren Kompression der Packs in einem genau zur Länge passenden Gehäuse notwendig ist.

Der Erfindung liegt die Aufgabe zu Grunde, ein Verfahren der eingangs genannten Gattung und auch eine Vorrichtung vorzuschlagen, die ein rascheres Prüfen erlauben.

Gelöst wird diese Aufgabe erfindungsgemäß mit einem Verfahren, das die Merkmale von Anspruch 1 aufweist, einerseits und mit einer Vorrichtung, welche die Merkmale des unabhängigen, auf die Vorrichtung gerichteten Anspruches aufweist, anderseits.

Bevorzugte und vorteilhafte Ausgestaltungen der Erfindung sind Gegenstand der Unteransprüche.

Die Erfindung erlaubt es, sicherzustellen, dass nur solche Batterieplatten-Pakete dem weiteren Herstellen von Batterien oder Akkumulatoren zugeleitet werden, deren Funktionalität durch die produktspezifische Kompression gewährleistet ist, da die Kompression des (AGM-)Separators dazu dient, ein lückenloses Anliegen zwischen Separator und Platte herzustellen. Die Stärke der notwendigen Kompression (Verdichtung) hängt von der Art der Batterietype ab, liegt jedoch im allgemeinen zwischen 15 bis 40 % Kompression. Dabei ist eine zu starke Kompression zu vermeiden, da das Separatormaterial, insbesondere wenn es sich um Glasfaservlies (AGM) handelt, zerstört werden kann.

Um das Prüfen der Batterieplatten-Pakete (AGM-Elemente) unter definierten Bedingungen auszuführen, wird erfindungsgemäß ein dynamisches Prüfverfahren vorgeschlagen, mit dem die Batterieplatten-Pakete auf ein vordefiniertes Maß (vorzugsweise Innenabmessung der Zelle in dem Batteriegehäuse) komprimiert und die dabei auftretenden Kräfte (kontinuierlich) gemessen werden.

Die erfindungsgemäße Arbeitsweise erlaubt es, das Überprüfen von Batterieplatten-Paketen innerhalb einer Zykluszeit von beispielsweise nur 1,5 Sekunden durchzuführen. Dies wird beispielsweise erreicht, indem die zu prüfenden Batterieplatten-pakete zwischen zwei Gurten durchgeführt und dabei komprimiert werden, wobei die auf die Gurte einwirkende Kraft gemessen wird.

In einer Ausführungsform der Erfindung kann vorgesehen sein, dass die Kraft an mehreren Stellen und zeitlich aufeinanderfolgend gemessen wird und dann ein Mittelwert errechnet wird, welcher der Beurteilung des Batterieplatten-Paketes zu Grunde gelegt wird.

In einer Ausführungsform der Erfindung kann vorgesehen sein, dass das Batterieplatten-Paket zwischen zwei, sich synchron bewegenden Förderbändern bewegt wird.

In einer Ausführungsform der Erfindung kann vorgesehen sein, dass als Förderbänder Endlosförderbänder verwendet werden.

In einer Ausführungsform der Erfindung kann vorgesehen sein, dass das Batterieplatten-Paket im Einlaufbereich der Förderbänder auf das vorgegebene Maß zusammengedrückt wird und im Anschluss daran an wenigstens einer Stelle die Kraft, die für das Zusammendrücken erforderlich ist, gemessen wird.

In einer Ausführungsform der Erfindung kann vorgesehen sein, dass Förderbänder verwendet werden, die quer zur Bewegungsrichtung durchgehend ausgebildet sind.

In einer Ausführungsform der Erfindung kann vorgesehen sein, dass die für das Zusammendrücken des Batterieplatten-Paketes auf die vorgegebene Dicke erforderliche Kraft an mehreren Stellen während der Bewegung des Batterieplatten-Paketes gemessen wird.

In einer Ausführungsform der Erfindung kann vorgesehen sein, dass aus mehreren Messwerten für die Kraft ein Mittelwert errechnet wird.

In einer Ausführungsform der Erfindung kann vorgesehen sein, dass im Anschluss an das Ermitteln der Kraft, die für das Zusammendrücken des Batterieplatten-Paketes auf ein vorgegebenes Maß erforderlich ist, das Gewicht des Batterieplatten-Paketes erfasst wird.

In einer Ausführungsform der Erfindung kann vorgesehen sein, dass das Gewicht des Batterieplatten-Paketes erfasst wird während es sich bewegt.

In einer Ausführungsform der Erfindung kann vorgesehen sein, dass die für das Zusammendrücken des Batterieplatten-Paketes erforderliche Kraft und gegebenenfalls das Gewicht des Batterieplatten-Paketes mit einem vorgegebenen Wert bzw. vorgegebenen Werten verglichen und bei einer Abweichung von diesem Wert, die über eine bestimmte Toleranz hinausgeht, das Batterieplatten-Paket ausgeschieden wird.

In einer Ausführungsform der Erfindung kann vorgesehen sein, dass eine Station zum Messen der Kraft, die zum Zusammendrücken des Batterieplatten-Paketes auf die vorgegebene Dicke erforderlich ist, vorgesehen ist.

In einer Ausführungsform kann sich der erfindungsgemäße Bodenbelag dadurch auszeichnen, dass die Station Endlosförderbänder aufweist, die sich im Messbereich zueinander parallel bewegen.

In einer Ausführungsform der Erfindung kann vorgesehen sein, dass den zueinander parallel ausgerichteten Trumen der Förderbänder Pressplatten zugeordnet sind, die auf der dem gegenüberliegenden Förderband abgekehrten Seite der Trume vorgesehen sind.

In einer Ausführungsform der Erfindung kann vorgesehen sein, dass die Stützplatten vorzugsweise Metall(Stahl-)platten oder Platten aus Kunststoff sind.

In einer Ausführungsform der Erfindung kann vorgesehen sein, dass die den Trumen der Förderbänder zugekehrten Seiten der Metallplatten geschliffen sind.

In einer Ausführungsform der Erfindung kann vorgesehen sein, dass wenigstens einem Förderband wenigstens eine Messzelle zum Aufnehmen der Kraft zugeordnet ist.

In einer Ausführungsform der Erfindung kann vorgesehen sein, dass mehrere Messzellen vorgesehen sind.

In einer Ausführungsform der Erfindung kann vorgesehen sein, dass die Messzelle mit der dem Förderband zugeordneten Platte verbunden ist.

In einer Ausführungsform der Erfindung kann vorgesehen sein, dass einlaufseitig wenigstens ein Förderband einen schräg ausgerichteten Bereich aufweist, so dass ein sich verjüngender Einlaufbereich zwischen die Förderbänder vorgesehen ist.

In einer Ausführungsform der Erfindung kann vorgesehen sein, dass wenigstens eines der Förderbänder im Maschinengestell verstellbar angeordnet ist.

In einer Ausführungsform der Erfindung kann vorgesehen sein, dass wenigstens einem der Förderbänder eine Überlastsicherung zugeordnet ist, die das Förderband freigibt, so bald die auf das Förderband einwirkende Kraft einen vorgegebenen Wert überschreitet.

In einer Ausführungsform der Erfindung kann vorgesehen sein, dass im Anschluss an die Prüfstation zum Messen der zum zusammendrücken erforderlichen Kraft eine Wiegestation vorgesehen ist.

In einer Ausführungsform der Erfindung kann vorgesehen sein, dass die Wiegestation Endlosförderbänder ausweist.

In einer Ausführungsform der Erfindung kann vorgesehen sein, dass im Anschluss an die Station zum Messen der Kraft und gegebenenfalls der Wiegestation ein Abtransport für Batterieplatten-Pakete vorgesehen ist und dass dem Abtransport eine Auswurfeinrichtung für fehlerhafte Plattenpakete zugeordnet ist.

In einer Ausführungsform der Erfindung kann vorgesehen sein, dass die Auswurfstation einen quer zur Förderrichtung des Abtransportes verstellbaren Schieber mit Hubtisch aufweist, dem eine Rollenbahn zugeordnet ist.

Ist der gemessene Wert der Kraft, die erforderlich ist, um das Batterieplatten-Paket auf das vordefinierte Maß zu komprimieren, innerhalb eines vorgegebenen Rahmens wird das Batterieplatten-Paket als in Ordnung befunden beurteilt. Bei Abweichungen der Kraft nach oben oder nach unten, die anzeigen, dass das Batterieplatten-Paket nicht in Ordnung ist, wird das Batterieplatten-Paket ausgeschieden und dem weiteren Herstellen von Batterien oder Akkumulatoren nicht zugeführt. Ein zu hoher Druck kann erforderlich sein, wenn im Batterieplatten-Paket zu viele Platten enthalten sind und/oder im Paket zu viel Separatormaterial, beispielsweise in Form einer nicht gefüllten, überzähligen Tasche vorliegt. Ein zu geringer Druck zeigt an, dass im Batterieplatten-Paket eine Batterieplatte und/oder eine Tasche aus Separatormaterial fehlt.

Um zu verhindern, dass die Qualität der Batterieplatten-Pakete beeinträchtigt wird, kann in einer Ausführungsform der Erfindung vorgesehen sein, dass Maßnahmen vorgesehen sind, das die beiden Bänder des Pressabschnittes synchron laufen.

In einer weiteren Ausführungsform kann vorgesehen sein, dass die Gurte in der Prüfstation eine Breite aufweisen, die wenigstens gleich groß ist wie die Breite des zu prüfenden Batterieplatten-Paketes.

Um möglichst definierte Bedingungen beim Messen der Presskraft zu erreichen und ein übermäßiges Erhitzen der Bänder zu vermeiden, wird wenigstens in dem Bereich, in dem das zusammengepresste Batterieplatten-Paket geführt wird, der Gurt des oberen und des unteren Bandes über, beispielswiese geschliffene, Metall(Stahl-) platten geführt.

In einer Ausführungsform der Erfindung kann vorgesehen sein, dass das untere Förderband (Gurt), insbesondere der Gurt, dem die Einrichtung zum Messen der Presskraft (Messzellen) zugeordnet sind, am Maschinengestell im wesentlichen starr befestigt ist, wogegen der obere Gurt am Maschinengestell einstellbar ist, um die Vorrichtung an verschiedene Größen/Stärken von Batterieplatten-Paketen anpassen zu können. Während des Betriebes wird aber auch der obere Gurt im vorgegebenen (voreingestellten) Abstand vom unteren Gurt gehalten.

Um eine Beschädigung der Vorrichtung zu vermeiden, kann vorgesehen sein, dass der obere Gurt und/oder der untere Gurt bei Überschreiten einer vorbestimmten Kraft, die auftritt während ein Batterieplatten-Paket zwischen den Gurten gefördert wird, nachgibt (ausweicht). Dies kann beispielsweise durch eine entsprechende Federbelastung oder eine Überlastsicherung erreicht werden.

Zusätzlich kann im Rahmen der Erfindung vorgesehen sein, im Anschluss an das Messen der für das Komprimieren erforderlichen Kraft ein Wiegen des Plattenpaketes vorzunehmen, wobei auch das Wiegen im Durchlaufverfahren ausgeführt werden kann.

Die in einer Ausführungsform der Erfindung gegebenenfalls vorgesehene Wiegestation ist als dynamisches Messmittel aufgebaut. Besonders zu beachten ist hier, dass die Vorlast, die auf die Wiegezelle wirkt, möglichst gering gehalten wird. Das Fördern von Batterieplatten-Paketen in der Wiegestation kann über Riemen oder Gurte verwirklicht werden, die direkt angetrieben werden können. Zur Gewichtsmessung werden beispielsweise zwei gegenüberliegende Wiegezellen eingesetzt.

Besonders zu beachten ist, dass alle Umlenkwalzen und Antriebe keine Unwucht aufweisen. Das Gestell soll von allen anderen Anlageteilen entkoppelt aufgebaut sein sowie mit vibrationshemmenden Standfüßen und Lagerungen versehen werden. Die Bandgeschwindigkeit kann variabel ausgeführt werden.

Bei der Erfindung kann im Anschluss an die Prüfstation oder die gegebenenfalls vorgesehene Wiegestation eine Auswurfstation vorgesehen sein, die zum Ausscheiden von fehlerhaften Batterieplatten-Paketen dient.

In einer beispielhaften Ausführungsform der zum Ausführen des erfindungsgemäßen Verfahrens vorgeschlagenen erfindungsgemäßen Vorrichtung wird das obere Transportband in Bezug auf das untere Transportband so eingestellt, dass der Abstand zwischen den beiden Bändern dem Batteriekasteninnenmaß oder einem vom Batteriehersteller gewünschten Maß entspricht. Danach wird das von einer Eintaschmaschine kommende Batterieplatten-Paket während des Transportes durch die Prüfstation zur Elementdickenkontrolle zwischen den Transportbänder (Gurten) vollflächig (die Gurte/Transportbänder sind breiter als die maximale Plattenbreite) auf das oben genannte Maß (Dicke) komprimiert und die dabei entstehende (die erforderliche)Kraft aufgenommen (erfasst). Da sich der Separator um ein vielfaches leichter komprimieren lässt als die eingetaschten Batterieplatten (Bleiplatten), ergibt sich die Kompression praktisch nur durch Verdichten von Separatormaterial. Das Messen der Kraft erfolgt über Messzellen (einfache, zweifache oder mehrfache Ausführung), die insbesondere direkt unter der Pressplatte unten montiert sind (können aber auch auf der oberen Pressplatte montiert werden). Anhand eines Startsignals (z.B. Lichtschranke, Sensor, kann aber auch zeitgesteuert erfolgen) wird das Messen gestartet. Danach wird während des Transportes eines Batterieplatten-Paketes eine Viehlzahl von Messwerten aufgenommen, die in einer Auswerteeinheit gemittelt werden, damit ein einziger Wert erhalten wird. Mit einem Stoppsignal (z.B. Lichtschranke, Sensor, kann aber auch zeitgesteuert erfolgen) wird das Messen beendet. Der ermittelte Messwert (Mittelwert) wird in einer Steuerung mit einem Vorgabewert verglichen und anhand der voreingestellten Toleranzen bewertet. Ist das Batterieplatten-Paket in Ordnung, wird es der weiteren Fertigung zugeführt, sollte es nicht entsprechen wird es ausgeschieden.

Wenn eine Wiegestation vorgesehen ist, wird die Bewertung des Batterieplatten-Paketes erst nach der Auswertung des Gewichtes des Batterieplatten-Paketes vorgenommen.

Die Steuerung der Anlage, das Auswerten der Messwerte, die Eingabe von Toleranzen und Elementdetails (Einzelheiten der Batterieplatten-Pakete) erfolgt vorzugsweise über eine PLC (Programmable Logic Controller) und eine HMI (Human Machine Interface) Einheit.

Weitere Einzelheiten und Merkmale der erfindungsgemäßen Verfahrensweise und der erfindungsgemäßen Vorrichtung ergeben sich aus der nachstehenden Beschreibung eines bevorzugten Ausführungsbeispiels an Hand der Zeichnungen:
Fig. 1 eine Ausführungsform einer erfindungsgemäßen Vorrichtung mit einer Station zur Elementdickenkontrolle ("Prüfstation"), einer Station für das Wiegen von Elementen ("Wiegestation") und einer Station für den Abtransport, der eine Auswurfstation zugeordnet ist,
Fig. 2 die Prüfstation für sich und
Fig. 3 eine Prüfstation mit nachgeordneter Wiegestation.

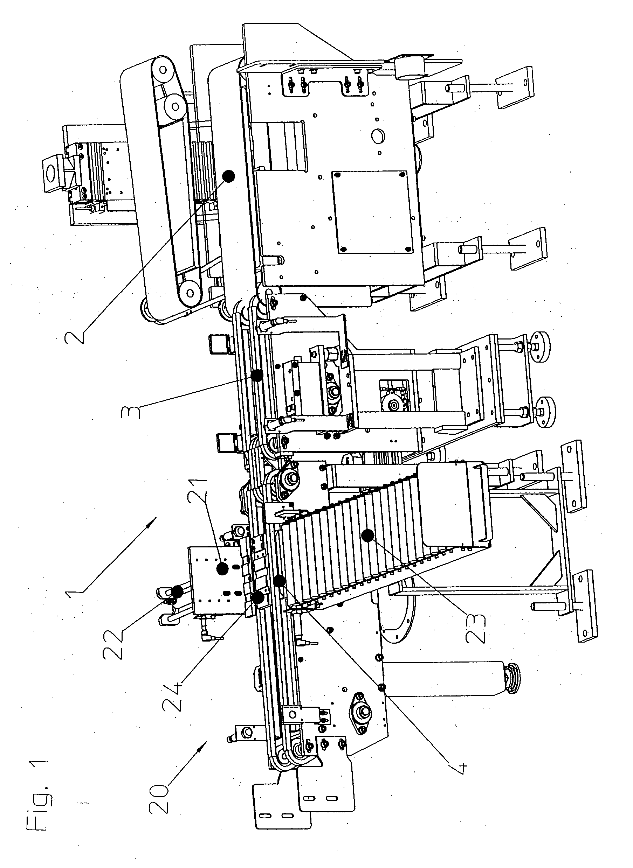

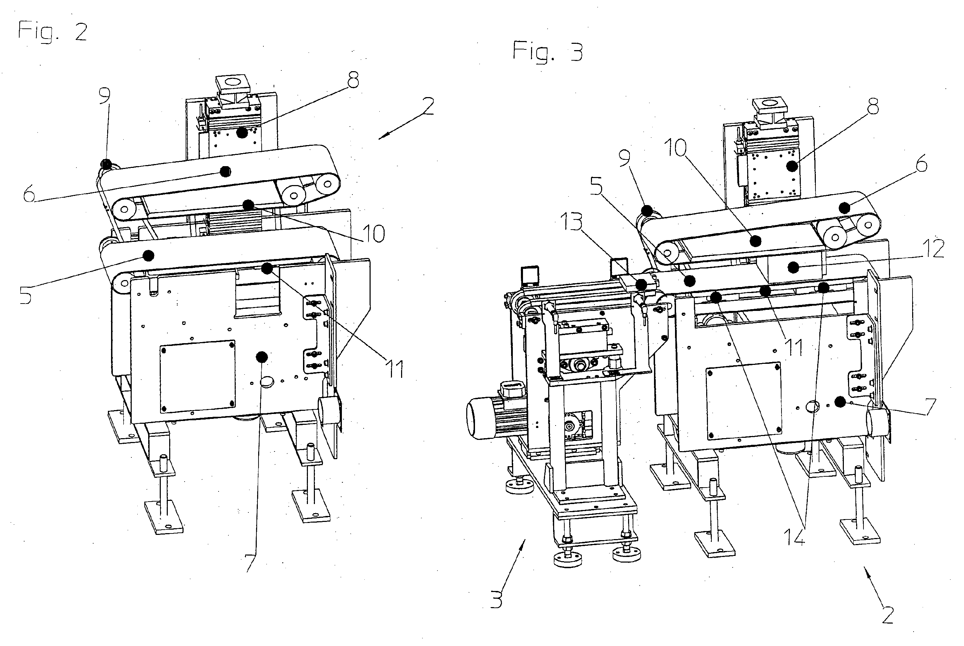

Eine in Fig.1 gezeigte Vorrichtung 1 besitzt eine Station 2 zum Prüfen der Dicke von Batterieplatten-Paketen 12, 13 (vgl. Fig. 3), eine Station 3 zum Wiegen von Batterieplatten-Paketen 12, 13 und eine Auswurfstation 4, die dem als Rollenbahn ausgebildeten Abtransport für Batterieplatten-Pakete 12, 13 zugeordnet ist.

In der in Fig. 2 gezeigten Prüfstation 2 sind zwei Endlostransportbänder 5 und 6 (Gurte) vorgesehen, die durch einen gemeinsamen Antrieb (Zahnriemen- oder Kettenantrieb 9) synchron bewegt werden. Bei der in Fig. 2 gezeigten Ausführungsform der Station 2 ist das untere Transportband 5 im Maschinengestell 7 ortsfest angeordnet, wogegen das obere Transportband 6 mit Hilfe eines Antriebes 8 verstellbar ist, so dass der Abstand zwischen den einander zugekehrten Trumen der Transportbänder 5 und 6 verstellt werden kann, um in der Prüfstation 2 das Prüfen unterschiedlich dicker Batterieplatten-Pakete 12, 13 zu erlauben. Wie in Fig. 3 gezeigt, können nach Einstellen des Abstandes zwischen den Transportbändern 5 und 6 dicke Plattenpakete 12 ebenso geprüft werden wie dünne Plattenpakete 13.

Aus den Zeichnungen ist ersichtlich, das die Transportbänder 5 und 6 eine Breite aufweisen, die wenigstens so groß ist wie die größte Breite von Batterieplatten in den Batterieplatten-Paketen 12 und 13.

Einlaufseitig (rechts in Fig. 2 und 3) ist das dem unteren Transportband 5 zugekehrte Trum des oberen Transportbandes 6 unter einem Winkel ausgerichtet, so dass das Batterieplatten-Paket 12 oder 13 beim Einlaufen zwischen die Transportbänder 5, 6 komprimiert wird.

In dem Bereich, in dem die einander zugekehrten Trume der Transportbänder 5 und 6 zueinander parallel verlaufend ausgerichtet sind, sind geschliffene Pressplatten 10, 11 (aus Stahl) vorgesehen, die dafür sorgen, dass in diesem Bereich definierte Verhältnisse vorliegen und ein übermäßiges Erwärmen der Transportbänder 5 und 6 vermieden ist.

Der unteren Pressplatte 11, also der Pressplatte 11, die dem unteren Transportband 5 zugeordnet ist, sind Messzellen 14 zugeordnet, wobei im gezeigten Ausführungsbeispiel zwei Messzellen 14 vorgesehen sind. Diese Messzellen 14 messen die Kraft, die auftritt, wenn das zwischen den Transportbändern 5 und 6 durchlaufende Batterieplatten-Paket 12 oder 13 auf die durch die Lage des oberen Transportbandes 6 vorgegebene Dicke komprimiert wird.

Wie weiter oben angedeutet, können mehrere Messungen vorgenommen werden, die gemittelt werden, um einen Mittelwert zu erhalten, welcher der Beurteilung des Batterieplatten-Paketes 12 oder 13 zu Grunde gelegt wird.

Auslaufseitig (links in Fig. 2) ist der Station 2 eine Wiegestation 3 nachgeordnet, in der das Gewicht von Batterieplatten-Paketen 12, 13 ermittelt wird.

Nach der Wiegestation 3 ist ein Abtransport 20 für Batterieplatten-Pakete 12 oder 13 vorgesehen, wobei Batterieplatten-Pakete 12 oder 13, welche die Prüfung bestanden haben, die also die richtige Anzahl von Batterieplatten und die richtige Anzahl von Taschen aus Separatoren aufweisen, weiter gefördert werden.

Batterieplatten-Pakete 12, 13, die auf Grund der Messung der Presskraft in der Station 2 und/oder eines unrichtigen Gewichtes in der Station 3 als fehlerhaft beurteilt worden sind, werden in einer Auswurfstation 4 ausgeworfen. Diese Auswurfstation 4 besitzt einen Hubtisch 24, welcher die Plattenpakete vom Transportband abhebt und eine Platte 21, die quer zur Förderrichtung mit Hilfe eines Druckmittelzylinders 22 antreibbar ist und fehlerhafte Plattenpakete auf einen Rollengang 23 seitlich herausschieben.

Zusammenfassend kann ein Ausführungsbeispiel der Erfindung wie folgt beschrieben werden:
Zum Prüfen von Batterieplatten-Paketen 12, 13 werden diese zwischen Förderbändern 5, 6 auf eine vorgegebene Dicke zusammengedrückt transportiert und während des Transportes der Batterieplatten-Pakete 12, 13 die für das Zusammendrücken erforderliche Kraft von Messzellen 14, die einer einem der Transportbänder 5 zugeordneten Pressplatte 11 zugeordnet sind, erfasst. Weicht diese Kraft von einem vorgegebenen Wert ab, wird das Batterieplatten-Paket als fehlerhaft beurteilt und ausgeworfen.

## Patentansprüche

1. Verfahren zum Prüfen von Batterieplatten-Paketen, bestehend aus mehreren, in Separatortaschen aufgenommen positiven und negativen Batterieplatten, wobei die Kraft gemessen wird, die notwendig ist, um das Batterieplatten-Paket auf eine vorgegebene Dicke zusammenzudrücken, **dadurch gekennzeichnet, dass** das Zusammendrücken und Messen der dazu erforderlichen Kraft ausgeführt wird, während sich das Batterieplatten-Paket bewegt.

2. Verfahren nach Anspruch 1, **dadurch gekennzeichnet, dass** das Batterieplatten-Paket zwischen zwei, sich synchron bewegenden Förderbändern bewegt wird.

3. Verfahren nach Anspruch 2, **dadurch gekennzeichnet, dass** das Batterieplatten-Paket im Einlaufbereich der Förderbänder auf das vorgegebene Maß zusammengedrückt wird und im Anschluss daran an wenigstens einer Stelle die Kraft, die für das Zusammendrücken erforderlich ist, gemessen wird.

4. Verfahren nach einem der Ansprüche 1 bis 3, **dadurch gekennzeichnet, dass** die für das Zusammendrücken des Batterieplatten-Paketes auf die vorgegebene Dicke erforderliche Kraft an mehreren Stellen während der Bewegung des Batterieplatten-Paketes gemessen wird.

5. Verfahren nach einem der Ansprüche 1 bis 4, **dadurch gekennzeichnet, dass** im Anschluss an das Ermitteln der Kraft, die für das Zusammendrücken des Batterieplatten-Paketes auf ein vorgegebenes Maß erforderlich ist, das Gewicht des Batterieplatten-Paketes erfasst wird.

6. Verfahren nach einem der Ansprüche 1 bis 5, **dadurch gekennzeichnet, dass** die für das Zusammendrücken des Batterieplatten-Paketes erforderliche Kraft und gegebenenfalls das Gewicht des Batterieplatten-Paketes mit einem vorgegebenen Wert bzw. vorgegebenen Werten verglichen und bei einer Abweichung von diesem Wert, die über eine bestimmte Toleranz hinausgeht, das Batterieplatten-Paket ausgeschieden wird.

7. Vorrichtung (1) zum Prüfen von Batterieplatten-Paketen mit dem Verfahren nach einem der Ansprüche 1 bis 6, **gekennzeichnet durch** eine Station (2) zum Messen der Kraft, die zum Zusammendrücken des Batterieplatten-Paketes (12, 13) auf die vorgegebene Dicke erforderlich ist.

8. Vorrichtung nach Anspruch 7, **dadurch gekennzeichnet, dass** die Station (2) Endlosförderbänder (5, 6) aufweist, die sich im Messbereich zueinander parallel bewegen.

9. Vorrichtung nach Anspruch 8, **dadurch gekennzeichnet, dass** den zueinander parallel ausgerichteten Trumen der Förderbänder (5, 6) Pressplatten (10, 11) zugeordnet sind, die auf der dem gegenüberliegenden Förderband (5, 6) abgekehrten Seite der Trume vorgesehen sind.

10. Vorrichtung nach einem der Ansprüche 7 bis 9, **dadurch gekennzeichnet, dass** wenigstens einem Förderband (5) wenigstens eine Messzelle (14) zum Aufnehmen der Kraft zugeordnet ist.

11. Vorrichtung nach einem der Ansprüche 8 bis 10, **dadurch gekennzeichnet, dass** einlaufseitig wenigstens ein Förderband (6) einen schräg ausgerichteten Bereich aufweist, so dass ein sich verjüngender Einlaufbereich zwischen die Förderbänder (5, 6) vorgesehen ist.

12. Vorrichtung nach einem der Ansprüche 8 bis 11, **dadurch gekennzeichnet, dass** wenigstens einem der Förderbänder (5, 6) eine Überlastsicherung zugeordnet ist, die das Förderband (5, 6) freigibt, so bald die auf das Förderband (5, 6) einwirkende Kraft einen vorgegebenen Wert überschreitet.

13. Vorrichtung nach einem der Ansprüche 7 bis 12, **dadurch gekennzeichnet, dass** im Anschluss an die Prüfstation (2) zum Messen der zum zusammendrücken erforderlichen Kraft eine Wiegestation (3) vorgesehen ist.

14. Vorrichtung nach einem der Ansprüche 7 bis 13, **dadurch gekennzeichnet, dass** im Anschluss an die Station (2) zum Messen der Kraft und gegebenenfalls der Wiegestation (3) ein Abtransport (20) für Batterieplatten-Pakete (12, 13) vorgesehen ist und dass dem Abtransport (20) eine Auswurfeinrichtung (4) für fehlerhafte Plattenpakete (12, 13) zugeordnet ist.

15. Vorrichtung nach Anspruch 14, **dadurch gekennzeichnet, dass** die Auswurfstation (4) einen quer zur Förderrichtung des Abtransportes (20) verstellbaren Schieber (21) mit Hubtisch (24) aufweist, dem eine Rollenbahn (23) zugeordnet ist.

## Claims

1. Method for testing battery plate packets, comprising of several positive and negative battery plates accommodated in separator pockets, wherein the force necessary for compressing the battery plate packet to a prescribed thickness is measured, **characterized in that** compression and the measurement of the force required for this purpose are performed while the battery plate packet is moving.

2. Method according to claim 1, **characterized in that** the battery plate packet is moved between two synchronously moving conveyor belts.

3. Method according to claim 2, **characterized in that** the battery plate packet in the inlet area of the conveyor belts is compressed to the prescribed extent, after which the force necessary for compression is measured at least at one location.

4. Method according to one of claims 1 to 3, **characterized in that** the force necessary for compressing the battery plate packet to the prescribed thickness is measured at several locations as the battery plate packet is moving.

5. Method according to one of claims 1 to 4, **characterized in that** after the force necessary for compressing the battery plate packet to a prescribed extent has been determined, the weight of the battery plate packet is ascertained.

6. Method according to one of claims 1 to 5, **characterized in that** the force required for compressing the battery plate packet and potentially the weight of the battery plate packet is compared with a prescribed value or prescribed values, and the battery plate packet is discarded given a deviation from this value that exceeds a specific tolerance.

7. Device (1) for testing the battery plate packets with the method according to one of claims 1 to 6, **characterized by** a station (2) for measuring the force necessary for compressing the battery plate packet (12, 13) to the prescribed thickness.

8. Device according to claim 7, **characterized in that** the station (2) comprises continuous conveyor belts (5, 6), which move parallel to each other in the measuring range.

9. Device according to claim 8, **characterized in that** the runs of the conveyor belts (5, 6) aligned parallel to each other have allocated to them pressing plates (10, 11), which are provided on the side of the runs facing away from the opposing conveyor belt (5, 6).

10. Device according to one of claims 7 to 9, **characterized in that** at least one measuring cell (14) for recording the force is allocated to at least one conveyor belt (5).

11. Device according to one of claims 8 to 10, **characterized in that** at least one conveyor belt (6) comprises an inclined area on the inlet side, so that a tapering inlet area is provided between the conveyor belts (5, 6).

12. Device according to one of claims 8 to 11, **characterized in that** at least one of the conveyor belts (5, 6) has allocated to it an overload safeguard, which releases the conveyor belt (5, 6) as soon as the force acting on the conveyor belt (5, 6) exceeds a prescribed value.

13. Device according to one of claims 7 to 12, **characterized in that** a weighing station (3) is provided after the testing station (2) for measuring the force necessary for compression.

14. Device according to one of claims 7 to 13, **characterized in that** a removal device (20) is provided for battery plate packets (12, 13) after the station (2) for measuring the force and potentially the weighing station (3), and that an ejection device (4) for defective plate packets (12, 13) is allocated to the removal device (20).

15. Device according to claim 14, **characterized in that** the ejection station (4) exhibits a slider (21), which can move transverse to the conveying direction of the removal device (20) and has a lifting table (24) having allocated to it a roller track (23).

## Revendications

1. Procédé de vérification de paquets de plaques de batterie, se composant de plusieurs plaques de batteries positives et négatives reçues dans des pochettes séparatrices, sachant que la force nécessaire pour compresser le paquet de plaques de batterie à une épaisseur prédéfinie est mesurée, **caractérisé en ce que** la compression et la mesure de la force nécessaire à cela sont effectuées pendant que le paquet de plaques de batterie est en déplacement.

2. Procédé selon la revendication 1, **caractérisé en ce que** le paquet de plaques de batterie est déplacé entre deux courroies de transport se déplaçant de façon synchrone.

3. Procédé selon la revendication 2, **caractérisé en ce que** le paquet de plaques de batterie est compressé à la dimension prédéfinie dans la zone d'entrée des bandes transporteuses puis, la force nécessaire à la compression est mesurée en au moins un point.

4. Procédé selon l'une des revendications 1 à 3, **caractérisé en ce que** la force nécessaire à la compression du paquet de plaques de batterie à l'épaisseur prédéfinie est mesurée en plusieurs points pendant le déplacement du paquet de plaques de batterie.

5. Procédé selon l'une des revendications 1 à 4, **caractérisé en ce qu'**à la suite du calcul de la force nécessaire à la compression du paquet de plaques de batterie à une dimension prédéfinie, le poids du paquet de plaques de batterie est détecté.

6. Procédé selon l'une des revendications 1 à 5, **caractérisé en ce que** la force nécessaire à la compression du paquet de plaques de batterie et le cas échéant le poids du paquet de plaques de batterie est/sont comparé(s) à une, respectivement des, valeur(s) prédéfinie(s) et, en cas d'écart par rapport à cette valeur, allant au-delà d'une tolérance définie, le paquet de plaques de batterie est éliminé.

7. Dispositif (1) pour vérifier des paquets de plaques de batterie comprenant le procédé selon l'une des revendications 1 à 6, **caractérisé par** un poste (2) pour mesurer la force nécessaire à la compression du paquet de plaques de batterie (12, 13) à l'épaisseur prédéfinie.

8. Dispositif selon la revendication 7, **caractérisé en ce que** le poste (2) présente des bandes transporteuses sans fin (5, 6) qui se déplacent parallèlement entre elles dans la plage de mesure.

9. Dispositif selon la revendication 8, **caractérisé en ce que** les longerons des bandes transporteuses (5, 6) alignés parallèlement entre eux ont des plaques de compression (10, 11) qui sont prévues sur le côté des longerons détourné de la bande transporteuse opposée (5, 6).

10. Dispositif selon l'une des revendications 7 à 9, **caractérisé en ce qu'**au moins une bande transporteuse (5) a au moins une cellule de mesure (14) pour enregistrer la force.

11. Dispositif selon l'une des revendications 8 à 10, **caractérisé en ce que** côté entrée, au moins une bande transporteuse (6) présente une partie oblique, de sorte qu'une zone d'entrée allant en rétrécissant est prévue entre les bandes transporteuses (5, 6).

12. Dispositif selon l'une des revendications 8 à 11, **caractérisé en ce qu'**au moins une des bandes transporteuses (5, 6) a une sécurité anti-surcharge qui libère la bande transporteuse (5, 6) dès que la force agissant sur la bande transporteuse (5, 6) dépasse une valeur prédéfinie.

13. Dispositif selon l'une des revendications 7 à 12, **caractérisé en ce qu'**un poste de pesage (3) est prévu immédiatement après le poste de contrôle (2) pour mesurer la force nécessaire à la compression.

14. Dispositif selon l'une des revendications 7 à 13, **caractérisé en ce qu'**immédiatement après le poste de contrôle (2) pour mesurer la force et le cas échéant le poste de pesage (3), il est prévu un enlèvement (20) pour les paquets de plaques de batterie (12, 13) et que l'enlèvement (20) a un dispositif d'éjection (4) pour les paquets de plaques de batterie (12, 13) défectueux.

15. Dispositif selon la revendication 14, **caractérisé en ce que** le poste d'éjection (4) présente un poussoir (21) avec table de levage (24) pouvant être réglé transversalement au sens de transport de l'enlèvement (20), auquel est attribué un convoyeur à rouleaux (23).
